Europäisches Patentamt

European Patent Office

Office européen des brevets

(11) Veröffentlichungsnummer: **0 485 899 A2**

# (12) EUROPÄISCHE PATENTANMELDUNG

(21) Anmeldenummer: **91119049.4**

(22) Anmeldetag: **08.11.91**

(51) Int. Cl.⁵: **A01C 17/00**

(30) Priorität: **14.11.90 DE 4036234**

(43) Veröffentlichungstag der Anmeldung:
**20.05.92 Patentblatt 92/21**

(84) Benannte Vertragsstaaten:
**DE FR GB NL**

(71) Anmelder: **Amazonen-Werke H. Dreyer GmbH**

**& Co. KG**
**Am Amazonenwerk 9-13**
**W-4507 Hasbergen-Gaste(DE)**

(72) Erfinder: **Dreyer, Heinz, Dipl.-Ing. Dr.**
**Am Amazonenwerk 7**
**W-4507 Hasbergen(DE)**

(54) **Schleuderdüngerstreuer.**

㊅ Schleuderdüngerstreuer, der einen Rahmen sowie einen mit einstellbaren Dosierorganen versehenen Vorratsbehälter aufweist und bei dem sich die rotierend angetriebenen und mit Wurfelementen versehenen Schleuderscheiben unterhalb des Vorratsbehälters und innerhalb des vom Vorratsbehälters seitlich begrenzten Bereiches befinden, wobei die Schleuderscheiben die Düngemittel über einen Bereich abschleudern, der die Baubreite des gesamten Schleuderdüngerstreuers wesentlich übersteigt und dessen effektive Streubreite veränderbar ist, wobei die Schleuderscheiben mit den Wurfelementen die Düngemittelpartikel in lückenlos seitlich aneinander anschließende und überlappende Streufächer über die zu bestreuende Bodenoberfläche in einem gleichmäßigen Streubild verteilen, wobei drei, vorzugsweise vier Schleuderscheiben unterhalb des Vorratsbehälters innerhalb des vom Vorratsbehälter seitlich begrenzten Bereich angeordnet sind, wobei das Streubild aus den jeweils einzeln von den einzelnen Schleuderscheiben erzeugten drei, vorzugsweise vier Streufächern derart zusammengesetzt wird, daß die von den vorzugsweise beiden inneren Schleuderscheiben erzeugten Streufächer von dem Streuer her gesehen und bezogen auf die Fahrtrichtung sich im wesentlichen nach hinten und in der Breite erstrecken, während sich die von den beiden äußeren Schleuderscheiben erzeugten Streufächer von dem Streuer her und in Fahrtrichtung gesehen sich im wesentlichen in die Breite seitlich des Streuers erstrecken. Um den bekannten Schleuderdüngerstreuer hinsichtlich der Anordnung der Dosiereinrichtung bzw. des Vorratsbehälters wesentlich zu vereinfachen, ist vorgesehen, daß die Schleuderscheibendrehachsen (16,17,18,19) der drei, vorzugsweise vier Schleuderscheiben (11,12,13,14) bezogen auf eine im rechten Winkel zur Fahrtrichtung verlaufenden Linie (22) versetzt angeordnet sind, und zwar derart, daß die mittlere bzw. die beiden inneren Schleuderscheibendrehachsen (17,18) auf der vorbesagten Linie liegen, während die Schleuderscheibendrehachse (16,19) der äußere Schleuderscheiben (11,14) gegenüber der vor besagten Linie bezogen auf die Fahrtrichtung (21), nach vorne versetzt angeordnet sind.

Rank Xerox (UK) Business Services
(-/2.18/2.0)

FIG. 2

Die Erfindung betrifft einen Schleuderdüngerstreuer gemäß des Oberbegriffes des Patentanspruches 1.

Ein derartiger Schleuderdüngerstreuer ist durch die DE-PS 33 37 762 bekannt. Dieser Schleuderdüngerstreuer weist vier Schleuderscheiben auf, wobei jeder Schleuderscheibe eine Trichterspitze des Vorratsbehälters mit Dosiereinrichtung zugeordnet ist. Die Schleuderscheiben sollen die Düngemittel in vier Streufächern derart abschleudern, daß die von den beiden inneren Schleuderscheiben erzeugten Streufächer von dem Streuer her gesehen und bezogen auf die Fahrtrichtung sich im wesentlichen nach hinten und in der Breite erstrek-ken, während sich die von den beiden äußeren Schleuderscheiben erzeugten Streufächer von dem Streuer her und in Fahrtrichtung gesehen sich im wesentlichen in die Breite seitlich des Streuers erstrecken sollen. Hierbei hat sich nun gezeigt, daß die Aufgabeflächen, auf denen die Düngemittel auf den Schleuderscheiben aufgegeben werden, für sämtliche Schleuderscheiben stark abweichend von einer geraden quer zur Fahrtrichtung verlaufenden Linie liegen müssen, wenn die Schleuderscheibendrehachsen auf einer quer zur Fahrtrichtung verlaufenden Linie liegen. Dieses ist für die Konstruktion des Vorratsbehälters äußerst ungünstig.

Der Erfindung liegt daher die Aufgabe zugrun-de, den bekannten Schleuderdüngerstreuer hin-sichtlich der Anordnung der Dosiereinrichtung bzw. des Vorratsbehälters wesentlich zu vereinfachen.

Diese Aufgabe wird erfindungsgemäß durch die kennzeichnenden Maßnahmen des Patentanspruches 1 gelöst. Infolge dieser Maßnahmen wird gewährleistet, daß ein einfach gebauter Vorratsbehälter mit Trichterspitzen verwendet werden kann, wobei die Trichterspitzen auf einer quer zur Fahrtrichtung verlaufenden geraden Linie liegen können. Um die unterschiedliche Lage der Aufgabenflächen auf die Schleuderscheiben zu erreichen, sind die Schleuderscheiben versetzt zueinander angeordnet.

Ein einfacher Antrieb der Schleuderscheiben läßt sich beispielsweise mit einem eigenen Hydraulikmotor für jede Schleuderscheibe erreichen.

Bei einer anderen Antriebsversion für die Schleuderscheiben ist vorgesehen, daß die Schleuderscheiben über einen Wellenzug angetrieben werden, wobei jeweils zwischen dem Getriebe der inneren Schleuderscheibe und dem Getriebe der äußeren Schleuderscheibe ein Gelenkwellenantrieb vorgesehen ist.

Weitere Einzelheiten der Erfindung sind den übrigen Unteransprüchen, der Beispielsbeschreibung und den Zeichnungen zu entnehmen. Hierbei zeigen

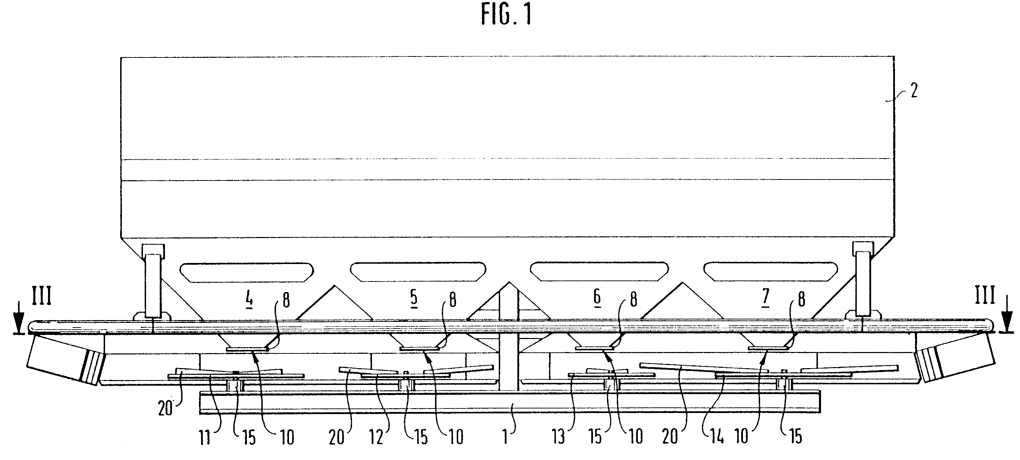

Fig. 1    den Schleuderdüngerstreuer in der Ansicht von hinten,

Fig. 2    den Schleuderdüngerstreuer in der Draufsicht und

Fig. 3    eine weitere Ausbildung des Schleud-erdüngerstreuers in der Ansicht ge-mäß III - III und in Prinzipdarstellung.

Der Schleuderdüngerstreuer weist den Rahmen 1 und den Vorratsbehälter 2 auf. Auf der Vorderse-te des Rahmens 1 sind die Dreipunktkupplungselemente 3 angeordnet, über welche der Schleuderdüngerstreuer an den nicht dargestellten Dreipunktkraftheber eines Ackerschleppers anzukuppeln ist. Der Vorratsbehälter 2 ist in seinem unteren Bereich in die vier Trichterspitzen 4, 5, 6 und 7 aufgeteilt. Jede Trichterspitze 4 bis 7 ist mittels einer Bodenplatte 8 verschlossen, in welcher sich jeweils die Auslaßöffnung 9 befindet. Unterhalb der Bodenplatte 9 ist ein einstellbarer Schieber angeordnet, mittels welchem die Auslaßöffnung 9 zu verschließen und in ihrer Öffnungsweite einzustellen ist. Die Auslaßöffnung 9 und der darunter angeordnete Schieber bilden jeweils die Dosiereinrichtung 10.

Unterhalb jeder Dosiereinrichtung 10 und den Trichterspitzen 4 bis 7 befinden sich die Schleuderscheiben 11, 12, 13 und 14. Die Schleuderscheiben 11 bis 14 sind jeweils auf einer Getriebeausgangswelle 15 der Getriebe 16, 17, 18 und 19 angeordnet. Diese Getriebe sind an dem Rahmen 1 angordnet.

Auf den Schleuderscheiben 11 bis 14 sind die Wurfelemente 20 angeordnet. Die Wurfelemente 20 auf den beiden Schleuderscheiben 11 und 14 weisen eine größere Länge als die Wurfelemente 20 auf den Schleuderscheiben 12 und 13 auf.

Die sich in dem Vorratsbehälter 2 befindlichen Düngerpartikel werden über die Dosierorgane 10 jeweils den Schleuderscheiben 11 bis 15 zugeführt. Hierbei werden die Düngerpartikel von den Wurfschaufeln 20 der Schleuderscheiben 11 bis 14 über einen Bereich abgeschleudert, der die Baubreite des gesamten Schleuderdüngerstreuers wesentlich übersteigt. Die Streubreite des Düngerstreuers ist veränderbar, wobei die Schleuderscheiben 11 bis 14 mit den Wurfelementen 20 die Düngerpartikel in lückenlos seitlich aneinander anschließende und überlappende Streufächer über die zu bestreuende Bodenoberfläche in einem gleichmäßigen Streubild verteilen. Die beiden äußeren Schleuderscheiben 11 und 14 erzeugen Streufächer, die sich von dem Streuer her und in Fahrtrichtung gesehen im wesentlichen in die Breite seitlich des Schleuerdün-gerstreuers erstrecken, während die von den beiden anderen Schleuderscheiben 12 und 13 erzeugten Streufächer von dem Streuer her gesehen und bezogen auf die Fahrtrichtung sich im wesentlichen nach hinten und in der Breite erstrecken.

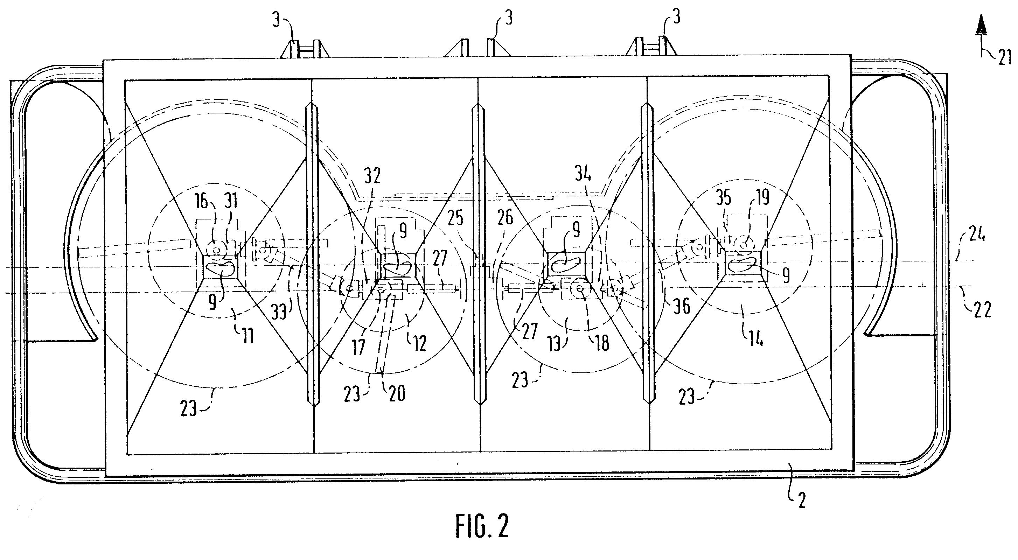

Die Schleuderscheiben 11 bis 14 sind, wie ein Blick auf die Fig. 2 zeigt, zu der im rechten Winkel zu der Fahrtrichtung 21 verlaufenden Linie 22 versetzt angeordnet. Die Linie 22 verläuft durch die Drehachsen 17 und 18 der beiden inneren Schleuderscheiben 12 und 13. Die Schleuderscheibenantriebswellen 16 und 19 der äußeren Schleuderscheiben 11 und 14 sind gegenüber der Linie 12 versetzt, bezogen auf die Fahrtrichtung, nach vorne angeordnet. Durch die mit strichpunktierten Linien 23 sind die äußeren Flugkreise der äußeren Teile der längeren Wurfschaufeln 20 angedeutet.

Der Vorratsbehälter 2 ist, wie bereits gesagt, in seinem unteren Bereich in die Auslauftrichtern 4 bis 7 aufgeteilt. Die Anzahl der Auslauftrichter entspricht der Anzahl der Schleuderscheiben 11 bis 15. Die Dosierorgane, welche von den Auslauföffnungen 9 in Verbindung mit den Schiebern gebildet werden, liegen auf einer im rechten Winkel zur Fahrtrichtung 21 verlaufenden Linie 24.

Die Schleuderscheiben 11 bis 15 werden über eine nicht dargestellte Gelenkwelle, welche an die Eingangswelle 25 des Mittelgetriebes 26 angeschlossen wird, und über die von den Wellen 27, 28, 29 und 30 gebildeten Wellenzug angetrieben. Hierbei sind jeweils zwischen dem Getriebe 31 und 32 eine Gelenkwelle 33 und zwischen dem Getriebe 34 und dem Getriebe 35 die Gelenkwelle 36 angeordnet.

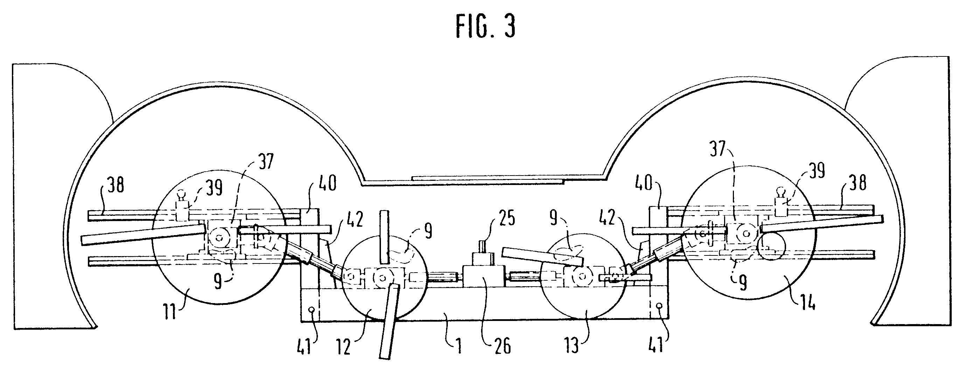

Die Fig. 3 zeigt die Anordnung der äußeren Schleuderscheiben 11 und 14 in einer etwas abgewandelten Anordnung zu der Anordnung gemäß Fig. 2. Bei dieser Ausführungsform sind die äußeren Schleuderscheiben 11 und 14 verschiebbar am Rahmen 1 des Schleuderdüngerstreuers angeordnet. Hierzu ist das Lagergehäuse 37 mit einer Schiebeführung 38 verschiebbar gegenüber dem Rahmen 1 und der Dosiereinrichtung des Schleuderdüngerstreuers angeordnet. Aufgrund dieser Schiebeführung 38 kann das Lagergehäuse 37 jeweils mit den Schleuderscheiben 11 bzw. 14 seitlich nach außen verschoben werden. Hierdurch werden die Aufgabenflächen des Düngers auf den Schleuderscheiben 11 bzw. 14 verlagert. Hierzu ist zwischen der Schiebeführung 38 und dem Lagergehäuse 37 jeweils die Stellvorrichtung 39 vorgesehen, mittels welcher das Lagergehäuse 37 jeweils exakt definiert in der Schiebeführung 38 eingestellt werden kann.

Darüberhinaus ist die Schiebeführung 38 an einem Schwenkarm 40 mittels des Gelenkes 41 jeweils an dem Rahmen 1 befestigt. Zwischen dem Schwenkarm 40 und dem Rahmen 1 ist eine weitere Stellvorrichtung 42 vorgesehen, mittels welcher der Schwenkarm 40 und somit die Schiebeführung 38 relativ zu dem Rahmen 1 und zu der jeweiligen Dosiereinrichtung in unterschiedliche Positionen einstellbar ist. Hierdurch ist es möglich, daß die Aufgabefläche des Düngers auf der Schleuderscheibe 11 bzw. 14 jeweils genau eingestellt werden kann. Somit kann also eine Streubildkorrektur in einfacher Weise vorgenommen werden. Es ist möglich, die Stellvorrichtung 39 bzw. 42 mittels einer Fernbedienungsvorrichtung vom Schleppersitz aus einstellbar auszuführen.

**Patentansprüche**

1. Schleuderdüngerstreuer, der einen Rahmen sowie einen mit einstellbaren Dosierorganen versehenen Vorratsbehälter aufweist und bei dem sich die rotierend angetriebenen und mit Wurfelementen versehenen Schleuderscheiben unterhalb des Vorratsbehälters und innerhalb des vom Vorratsbehälters seitlich begrenzten Bereiches befinden, wobei die Schleuderscheiben die Düngemittel über einen Bereich abschleudern, der die Baubreite des gesamten Schleuderdüngerstreuers wesentlich übersteigt und dessen effektive Streubreite veränderbar ist, wobei die Schleuderscheiben mit den Wurfelementen die Düngemittelpartikel in lükkenlos seitlich aneinander anschließende und überlappende Streufächer über die zu bestreuende Bodenoberfläche in einem gleichmäßigen Streubild verteilen, wobei drei, vorzugsweise vier Schleuderscheiben unterhalb des Vorratsbehälters innerhalb des vom Vorratsbehälter seitlich begrenzten Bereich angeordnet sind, wobei das Streubild aus den jeweils einzeln von den einzelnen Schleuderscheiben erzeugten drei, vorzugsweise vier Streufächern derart zusammengesetzt wird, daß die von den vorzugsweise beiden inneren Schleuderscheiben erzeugten Streufächer von dem Streuer her gesehen und bezogen auf die Fahrtrichtung sich im wesentlichen nach hinten und in der Breite erstrecken, während sich die von den beiden äußeren Schleuderscheiben erzeugten Streufächer von dem Streuer her und in Fahrtrichtung gesehen sich im wesentlichen in die Breite seitlich des Streuers erstrecken, dadurch gekennzeichnet, daß die Schleuderscheibendrehachsen (16,17,18,19) der drei, vorzugsweise vier Schleuderscheiben (11,12,13,14) bezogen auf eine im rechten Winkel zur Fahrtrichtung verlaufenden Linie (22) versetzt angeordnet sind, und zwar derart, daß die mittlere bzw. die beiden inneren Schleuderscheibendrehachsen (17,18) auf der vorbesagten Linie liegen, während die Schleuderscheibendrehachse (16,19) der äußere Schleuderscheiben (11,14) gegenüber der vorbesagten Linie bezogen auf die Fahrtrichtung (21), nach vorne versetzt angeordnet sind.

2. Schleuderdüngerstreuer nach einem oder mehreren der vorstehenden Ansprüche, dadurch gekennzeichnet, daß der Vorratsbehälter (2) in seinem unteren Bereich in eine der unter ihm angeordneten Schleuderscheiben (11,12,13,14) entsprechende Anzahl von Auslauftrichtern (4,5,6,7) aufgeteilt ist und in deren unteren Bereich die Dosierorgane (10) angeordnet sind, und daß die Dosierorgane (10) zumindest in etwa auf einer im rechten Winkel zur Fahrtrichtung (21) verlaufenden gemeinsamen Linie (24) liegen.

3. Schleuderdüngerstreuer nach einem oder mehreren der vorstehenden Ansprüche, dadurch gekennzeichnet, daß die Schleuderscheiben jeweils mit einem eigenen Hydraulikmotor angetrieben werden.

4. Schleuderdüngerstreuer nach einem oder mehreren der vorstehenden Ansprüche, dadurch gekennzeichnet, daß die Schleuderscheiben (11,12,13,14) über einen Wellenzug angetrieben werden, wobei jeweils zwischen dem Getriebe (32,34) der inneren Schleuderscheibe (12,13) und dem Getriebe (31,35) der äußeren Schleuderscheibe (11,14) ein Gelenkwellenantrieb (33,36) vorgesehen ist.

5. Schleuderdüngerstreuer nach einem oder mehreren der vorstehenden Ansprüche, dadurch gekennzeichnet, daß die Lagergehäuse (37) der äußeren Schleuderscheiben (11,14) gegenüber dem Rahmen (1) des Schleuderdüngerstreuers verstellbar angeordnet sind.

6. Schleuderdüngerstreuer nach einem oder mehreren der vorstehenden Ansprüche, dadurch gekennzeichnet, daß die Lagergehäuse (37) der äußeren Schleuderscheiben (11,14) in einer Schiebeführung (38) angeordnet sind.

7. Schleuderdüngerstreuer nach einem oder mehreren der vorstehenden Ansprüche, dadurch gekennzeichnet, daß die äußeren Schleuderscheiben (11,14) seitlich nach außen und/oder bezogen auf die Fahrtrichtung (21) nach hinten und/oder bezogen auf die Fahrtrichtung (21) nach vorne verschiebbar angeordnet sind.

8. Schleuderdüngerstreuer nach einem oder mehreren der vorstehenden Ansprüche, dadurch gekennzeichnet, daß der Rahmen der Schiebeführung (38) verschwenkbar am Rahmen (1) des Schleuderdüngerstreuers angeordnet ist.

9. Schleuderdüngerstreuer nach einem oder mehreren der vorstehenden Ansprüche, dadurch gekennzeichnet, daß die Lagergehäuse (37) der äußeren Schleuderscheibe (11,14) mittels Stellvorrichtung (39) verstellbar und/oder der Rahmen der Schiebeführung (38) mittels einer Stellvorrichtung (42) verschwenkbar sind.

10. Schleuderdüngerstreuer nach einem oder mehreren der vorstehenden Ansprüche, dadurch gekennzeichnet, daß die Stellvorrichtungen fernbedienbar ausgebildet sind.

FIG.1

EP 0 485 899 A2

FIG. 2

EP 0 485 899 A2

FIG. 3